**Europäisches Patentamt**

**European Patent Office**

**Office européen des brevets**

(19)

(11) Veröffentlichungsnummer: **0 043 001**
**B1**

(12) **EUROPÄISCHE PATENTSCHRIFT**

(45) Veröffentlichungstag der Patentschrift:
06.11.85

(51) Int. Cl.⁴: **G 01 N 27/12**, G 01 N 27/22

(21) Anmeldenummer: **81104405.6**

(22) Anmeldetag: **09.06.81**

(54) **Feuchtigkeitsfühler und Verfahren zu seiner Herstellung.**

(30) Priorität: **27.06.80 DE 3024297**

(43) Veröffentlichungstag der Anmeldung:
**06.01.82 Patentblatt 82/1**

(45) Bekanntmachung des Hinweises auf die Patenterteilung:
**06.11.85 Patentblatt 85/45**

(84) Benannte Vertragsstaaten:
**CH FR GB IT LI NL SE**

(56) Entgegenhaltungen:
**DE - A - 2 728 092**
**DE - A - 2 824 609**
**DE - B - 2 938 434**

**JAPAN.J. APPL. PHYSICS, Band 16, Nr. 7, Juli 1977 Tokyo S. YAMANAKA et al. "Deposition of Tantalum Thin Films by Ion Beam Sputtering" Seiten 1245, 1246**
**THIN SOLID FILMS, Band 63, Nr. 2, November 1979 Lausanne S. SCHILLER et al. "Reactive D.C. Sputtering with the Magnetron-Plasmatron for Tantalum Pentoxide and Titanium Dioxide Films" Seiten 369 bis 375**
**THIN SOLID FILMS, Band 61, Nr. 3, August 1979 Lausanne M.H. ROTTERSMAN et al. "Properties of Planar-Magnetron-Sputtered Tantalum Films" Seiten 281 bis 288**
**Chemical Abstracts Band 70, Nr. 12, 24. März 1969**

(73) Patentinhaber: **Endress u. Hauser GmbH u.Co.,**
**Hauptstrasse 1, D-7867 Maulburg (DE)**

(72) Erfinder: **Lüder, Ernst, Prof. Dr., Kaulbachweg 3a,**
**D-7000 Stuttgart 1 (DE)**
Erfinder: **Kallfass, Traugott, Dr., Gotenstrasse 7,**
**D-7141 Grossbottwar (DE)**

(74) Vertreter: **Leiser, Gottfried, Dipl.-Ing. et al,**
**Patentanwälte Prinz, Bunke & Partner Ernsberger**
**Strasse 19, D-8000 München 60 (DE)**

(56) Entgegenhaltungen: (Fortsetzung)
**Columbus, Ohio, USA B.H. VROMEN "Low-density tantalum" Seite 385, Zusammenfassung 51969a**
**Chemical Abstracts Band 81, Nr. 10, 9. September 1974 Columbus, Ohio, USA F. MERUNKA et al. "Thin-film capacitors based on low-density tantalum" Seite 406, Zusammenfassung 55490n**

**Beschreibung**

Die Erfindung betrifft einen kapazitiven Feuchtigkeitsfühler mit einer auf ein feuchtigkeitsunempfindliches Substrat aufgebrachten feuchtigkeitsempfindlichen dünnen Schicht aus Tantaloxid und mit wenigstens zwei an der Tantaloxidschicht im Abstand voneinander angeordneten Elektroden, sowie ein Verfahren zum Herstellen der feuchtigkeitsempfindlichen Schicht eines solchen Feuchtigkeitsfühlers.

In der DE-A 2 728 092 ist ein Feuchtigkeitsfühler beschrieben, der eine Basiselektrode aus einem Stück Tantal, eine durch anodische Oxidation des Tantalstücks gebildete Tantaloxidschicht und eine einen Teil der Tantaloxidschicht bedeckende äussere Elektrode aufweist. Durch die Verwendung einer feuchtigkeitsempfindlichen Schicht aus Tantaloxid auf einer Basiselektrode aus einem Tantalstück sollen die vorteilhaften Eigenschaften von Tantal und Tantaloxid für Feuchtigkeitsfühler nutzbar gemacht und die Nachteile früher bekannter Feuchtigkeitsfühler mit Metalloxidschicht behoben werden.

Die am weitesten verbreiteten Metalloxid-Feuchtigkeitsfühler enthalten eine Aluminiumoxidschicht auf einer Basiselektrode aus Aluminium. Solche Feuchtigkeitsfühler weisen eine gute Empfindlichkeit aus, weil Aluminiumoxid sehr porös ist und deshalb Feuchtigkeit in einer vom Dampfdruck des Wassers in der Umgebungsatmosphäre abhängigen Menge aufnimmt, wobei sich die Kapazität und der spezifische Widerstand der Aluminiumoxidschicht in Abhängigkeit von der aufgenommenen Feuchtigkeit verhältnismässig stark ändern. Feuchtigkeitsfühler auf Aluminiumbasis weisen aber eine unzureichende elektrische Langzeitstabilität auf, sie reagieren empfindlich auf mechanische und chemische Verunreinigungen und sie sind für die Verwendung in einer korrodierenden oder oxidierenden Umgebung nicht geeignet. Dagegen sind Tantal und Tantaloxid sehr korrosionsbeständig, und sie weisen auch andere günstige Eigenschaften auf, wie gute Langzeitstabilität, Temperaturfestigkeit und mechanische Robustheit, so dass an sich ein Feuchtigkeitsfühler auf Tantalbasis einem Feuchtigkeitsfühler auf Aluminiumbasis überlegen wäre.

Die Praxis hat aber gezeigt, dass ein Feuchtigkeitsfühler der aus der DE-A 2 728 092 bekannten Art mit einer durch anodische Oxidation eines Tantalstücks gebildeten Tantaloxidschicht nicht ohne weiteres einen Feuchtefühler auf Aluminiumbasis ersetzen kann. Das auf diese Weise erhaltene Tantaloxid ist nämlich nicht sehr porös und daher nur wenig feuchtigkeitsempfindlich. Eine unmittelbare Verwendung eines solche Feuchtigkeitsfühlers ist daher allenfalls in begrenzten Bereichen für Sonderfälle möglich. Zur Schaffung eines allgemein verwendbaren Feuchtigkeitsfühlers muss dagegen das Tantaloxid einer besonderen Behandlung unterzogen werden. In der DE-A 2 728 092 ist vorgeschlagen, der für die Oxidation verwendeten elektrolytischen Lösung eine genau abgemessene Menge Lithium oder Magnesiumchlorid zur Dotierung der Tantaloxidschicht zuzusetzen.

Ein anderer, aus der DE-A 2 824 609 bekannter kapazitiver Feuchtigkeitsfühler enthält ebenfalls ein Metall-Substrat, das insbesondere aus Tantal besteht, und eine durch Oxidation eines Oberflächenbereichs des Substrats gebildeten dielektrischen Oxidfilm. Auf dem dielektrischen Oxidfilm ist eine gasdurchlässige zweite Elektrodenschicht, die vorzugsweise eine halbleitende Metalloxidschicht ist, so ausgebildet, dass sie in mikroskopischer Sicht nur teilweise mit dem dielektrischen Oxidfilm in enger Berührung ist. Der dielektrische Oxidfilm dient zur Verhinderung eines Kurzschlusses zwischen den beiden Elektroden, die einerseits durch das Metall-Substrat und andrerseits durch die halbleitende Metalloxidschicht gebildet sind. Die feuchtigkeitsempfindlichen Bereiche sind in diesem Fall dagegen in erster Linie die mikroskopischen Hohlräume zwischen dem dielektrischen Oxidfilm und der gasdurchlässigen halbleitenden Metalloxidschicht, wobei das Verhältnis der tatsächlichen Berührungsfläche zu der scheinbaren Berührungsfläche für die feuchtigkeitsbedingte Kapazitätsänderung massgeblich ist. Auch in diesem Fall sind aufwendige Massnahmen getroffen, um eine befriedigende Fühlerempfindlichkeit zu erzielen, weil die durch Oxidation eines Oberflächenbereichs eines massiven Tantal-Substrats erhaltene Tantaloxidschicht für sich allein nicht geeignet ist.

Die zuvor erwähnten vorteilhafen Eigenschaften von Tantal und Tantaloxid ($Ta_2O_5$) haben auch dazu geführt, dass diese Stoffe sehr weitgehende Verwendung in der Dünnschichttechnik gefunden haben, wobei anstelle von Stück-Tantal (Bulk) dünne Tantalschichten durch Aufstäuben oder Aufdampfen auf einem isolierenden Substrat (z.B. aus Glas oder Keramik) gebildet werden. Wenn Tantaloxidschichten benötigt werden, können diese durch Oxidation von zuvor aufgebrachten Tantalschichten erhalten werden. Die Tantalschichten können zur Bildung von Widerständen und die Tantaloxidschichten zur Bildung von Kondensatordielektrika dienen. Man unterscheidet zwei Modifikationen der durch Aufstäuben oder Aufdampfen gebildeten dünnen Tantalschichten, die sich hinsichtlich ihrer Dichte und ihres spezifischen Widerstands nicht wesentlich von Stück-Tantal (Bulk) unterscheiden, nämlich eine α-Modifikation und eine β-Modifikation. Für diese Modifikation gelten im Vergleich zu Stück-Tantal (Bulk) etwa die folgenden Werte:

| | Dichte g/cm³ | spezifischer Widerstand μΩcm |
|---|---|---|
| Stück-Tantal (Bulk) | 16,6 | 13 |
| Dünnschicht α-Modifikation | 15,6 | 25–50 |
| Dünnschicht β-Modifikation | 15,9 | 180–220 |

Infolge der etwa gleichen Dichte des Metalls unterscheiden sich auch die Oxide der α-Modifika-

tion und der β-Modifikation nicht wesentlich von dem Oxid des Stück-Tantals. Inbesondere sind diese Oxide gleichfalls nicht sehr porös und daher wenig feuchtigkeitsempfindlich. Die geringe Feuchtigkeitsempfindlichkeit ist gerade einer der Gründe, warum die Oxide der α- und β-Modifikationen bevorzugt als Kondensatordielektrika in Dünnschicht-Kondensatoren oder in integrierten Dünnschichtschaltungen verwendet werden.

Wollte man dagegen das Oxid der α- oder β-Modifikation dünner Tantalschichten in einem Feuchtigkeitsfühler verwenden, so müsste es einer ähnlichen Nachbehandlung unterzogen werden wie das Oxid des Stück-Tantals. Die hierfür erforderlichen Verfahrensschritte wären mit der üblichen Dünnschichttechnik nicht vereinbar, und sie könnten auch nicht in den für die Herstellung von Dünnschicht-Bauelementen vorhandenen Anlagen durchgeführt werden.

Aufgabe der Erfindung ist die Schaffung eines Feuchtigkeitsfühlers, der alle Vorteile der Feuchtigkeitsfühler auf Tantalbasis aufweist, jedoch hinsichtlich Empfindlichkeit und Messbereich mit den Feuchtigkeitsfühlern auf Aluminiumbasis vergleichbar ist und mit verhältnismässig einfachen, mit der üblichen Dünnschichttechnik kompatiblen Verfahrenstechnik kompatiblen Verfahrensschritten herstellbar ist.

Ausgehend von einem Feuchtigkeitsfühler der eingangs angegebenen Art wird diese Aufgabe nach der Erfindung dadurch gelöst, dass die Tantaloxidschicht aus dem Oxid des hochohmigen Tantals geringer Dichte mit einem spezifischen Widerstand von mehr als 10 000 μΩcm besteht.

Der Feuchtigkeitsfühler nach der Erfindung beruht auf der Verwendung des Oxids einer besonderen Modifikation von Tantal, die ebenfalls nur in dünnen Schichten vorliegt, sich aber von den zuvor erwähnten α- und β-Modifikationen und somit auch von Stück-Tantal hinsichtlich Struktur, Dichte und spezifischem Widerstand wesentlich unterscheidet. Diese Modifikation ist in den folgenden englischsprachigen Veröffentlichungen beschrieben und dort «low density»-Tantal genannt:

1. «Handbook of Thin Film Technology» von L.I. Maissel und R. Glang, McGraw Hill, 1970, Seiten 18–12 bis 18–15;

2. «Thin Film Technology» von R.W. Berry u.a. Van Nostrand Reinhold, New York, 1978 Seiten 226 bis 231.

Wie aus diesen Veröffentlichungen hervorgeht, entsteht das «low density»-Tantal unter bestimmten Bedingungen beim Austäuben (Sputtern) von Tantal in dünnen Schichten, wobei sich als wesentlicher Parameter die Sputter-Spannung, d.h. die Beschleunigungsspannung der Argonionen, herausgestellt hat. Mit abnehmender Sputterspannung sinkt die Dichte des Tantals in der aufgestäubten dünnen Schicht auf Werte, die

unter 14 g/cm³ liegen und bis auf nahezu 10 g/cm³ herabgehen können, während der spezifische Widerstand auf Werte steigt, die bisher bereits 5000 μΩcm und mehr betragen; es können Werte bis zu 40 000 μΩcm erreicht werden.

Wegen dieser beiden Eigenschaften, durch die sich das «low density»-Tantal von der α- und β-Modifikation und vom Stück-Tantal unterscheidet, soll es hier «hochohmiges Tantal geringer Dichte» genannt werden.

Wie aus der Veröffentlichung «Chemical Abstracts» Band 70 (1969), S. 385, Zusammenfassung Nr. 51 969a hervorgeht, war die höhere Porosität von «low-density»-Tantal aufgrund von Untersuchungen bekannt, die bei Bell Laboratories durchgeführt wurden. In dieser Veröffentlichung wird insbesondere vorgeschlagen, den hohen spezifischen Widerstand von «low-density»-Tantalfilmen zur Bildung von hochohmigen Widerständen in Dünnschichtschaltungen auszunutzen. Aus der Veröffentlichung «Chemical Abstracts» Band 81 (1974), S. 406, Zusammenfassung Nr. 55 490n, ist es darüber hinaus bekannt, das durch Oxidation eines «low-density»-Tantalfilms erhaltene Tantaloxid als Dielektrikum eines Dünnschichtkondensators zu verwenden. Diese Verwendung des Oxids von «low-density»-Tantal lässt jedoch nicht auf eine besondere Eignung für Feuchtigkeitsfühler schliessen, das als Kondensator-Dielektrika bevorzugt möglichst feuchtigkeitsunempfindliche Materialien gewählt werden. Eine besondere Feuchtigkeitsempfindlichkeit solcher Kondensatoren konnte auch nicht als Zufallsprodukt konstatiert werden, da die feuchtigkeitsundurchlässigen Kondensatorelektroden den Zutritt von Feuchtigkeit zu dem Dielektrikum weitgehend verhindern und die bei Kondensatoren übliche Einkapselung zusätzlich jeden Einfluss der Umgebungsfeuchtigkeit verhindert.

Die Erfindung beruht auf der Erkenntnis der besonderen Eignung des Oxids von hochohmigem Tantal geringer Dichte für Feuchtigkeitsfühler, weil es einerseits eine poröse Struktur hat, die es besonders feuchteempfindlich macht, andrerseits aber hinsichtlich mechanischer Feuchtigkeit, chemischer Beständigkeit und elektrischer Langzeitstabilität ähnliche günstige Eigenschaften wie normales Tantaloxid hat. Somit kann ein Feuchtigkeitsfühler unmittelbar dadurch erhalten werden, dass eine dünne Schicht aus hochohmigem Tantal geringer Dichte oxidiert wird, beispielsweise durch anodische Oxidation. Die dadurch erhaltene Tantaloxidschicht ist ohne weitere Strukturveränderung als feuchtigkeitsempfindliche Schicht geeignet und weist eine Feuchtigkeitsempfindlichkeit auf, die derjenigen von Aluminiumoxid vergleichbar ist. Sowohl das Aufbringen einer dünnen Schicht hochohmigen Tantals geringer Dichte als auch die Oxidation einer solchen Schicht sind Verfahrensschritte, die mit der üblichen Dünnschichttechnik vereinbar sind; es müssen jedoch die Parameter entsprechend verändert werden. Auch alle übrigen zur Vervollständigung eines Feuchtigkeitsfühlers nach der Erfindung erforderlichen Verfahrensschritte, wie Formgebung und Aufbringen der Elektroden, können entsprechend der üblichen Dünnschichttechnik und in hierfür vorgesehenen, vorhandenen Anlagen durchgeführt werden.

Diese Kompatibilität bietet die weitere Möglichkeit, auf dem gleichen Substrat zugleich mit dem Feuchtigkeitsfühler auch die erforderliche Auswerteschaltung in integrierter Dünnschichttechnik zu bilden. Dies vereinfacht und verbilligt die Herstellung, ergibt einen kompakten Aufbau und infolge der kurzen elektrischen Verbindungen auch bessere Eigenschaften. Durch Anwendung des aus der DE-A 2 714 034 bekannten Verfahrens zur Einstellung des Temperaturkoeffizienten von Dünnschichtschaltungen mit Tantal- und/oder Tantaloxidschichten ist es dann sogar möglich, der ganzen, aus dem Feuchtigkeitsfühler und der Auswerteschaltung bestehenden integrierten Anordnung eine gezielte Temperaturabhängigkeit zu erteilen.

Ein bevorzugtes Verfahren zum Herstellen der feuchtigkeitsempfindlichen Schicht eines kapazitiven Feuchtigkeitsfühlers nach der Erfindung, bei dem auf einem feuchtigkeitsempfindlichen Substrat durch Kathodenzerstäubung einer Tantalprobe eine dünne Tantalschicht abgeschieden wird und die Tantalschicht oxidiert wird, besteht nach der Erfindung darin, dass die für die Kathodenzerstäubung massgeblichen Parameter, nämlich die Beschleunigungsspannung der zur Zerstäubung der Tantalprobe verwendeten Argonionen, der Partialdruck des Argons und die Substrattemperatur, so eingestellt werden, dass die sich ergebende Tantalschicht aus Tantal geringer Dichte mit einem spezifischen Widerstand von mehr als 10 000 µΩcm besteht.

Der Feuchtigkeitsfühler nach der Erfindung kann mit allen Elektrodenstrukturen ausgebildet werden, die bereits bei Feuchtigkeitsfühlern mit Aluminiumoxidschichten oder anderen feuchtigkeitsempfindlichen Materialien bekannt sind, insbesondere also mit einer äusseren Elektrode in Form einer dünnen, zusammenhängenden, feuchtigkeitsdurchlässigen Metallschicht oder auch mit in einer Ebene liegenden Kammelektroden.

Eine besonders vorteilhafte Ausführungsform des Feuchtigkeitsfühlers nach der Erfindung zeichnet sich aber durch eine äussere Elektrode mit Gitterstruktur aus. Die Metallschicht der Gitterelektrode braucht nicht feuchtigkeitsdurchlässig zu sein und kann daher wesentlich dicker und stabiler sein. Ferner hat es sich herausgestellt, dass der für die Feuchtigkeitsmessung massgebliche Effekt haupsächlich entlang den Kanten der Elektrode stattfindet, die bei einer Gitterelektrode eine sehr grosse Länge, bezogen auf die Flächeneinheit, haben können.

Eine andere vorteilhafte Ausführungsform des Feuchtigkeitsfühlers nach der Erfindung enthält in besonderer Weise hergestellte Kammelektroden.

Vorteilhafte Ausgestaltungen und Weiterbildungen der Erfindung sind in den abhängigen Ansprüchen gekennzeichnet.

Die Merkmale und Vorteile der Erfindung ergeben sich aus der folgenden Beschreibung von Ausführungsbeispielen anhand der Zeichnung. In der Zeichnung zeigen:

Fig. 1 ein Flussdiagramm der Verfahrensschritte eines bevorzugten Verfahrens zum Herstellen eines Feuchtigkeitsfühlers,

Fig. 2a bis 2i Schnittansichten verschiedener Fertigungsstadien, die bei der Herstellung des in Fig. 4 dargestellten Feuchtigkeitsfühlers nach dem Verfahren von Fig. 1 entstehen, wobei die Schnitte entlang der Linie A–B von Fig. 4 gelegt sind,

Fig. 3 eine Draufsicht auf die Grundelektrode des Feuchtigkeitsfühlers von Fig. 4,

Fig. 4 eine Draufsicht auf den fertigen Feuchtigkeitsfühler,

Fig. 5 eine Draufsicht auf eine andere Ausführungsform des Feuchtigkeitsfühlers,

Fig. 6 eine Schnittansicht des Feuchtigkeitsfühlers entlang der Linie C–D von Fig. 5,

Fig. 7a bis 7f Schnittansichten einer weiteren Ausführungsform eines Feuchtigkeitsfühlers in verschiedenen Fertigungsstadien, wobei der Schnitt entlang der Linie E–F von Fig. 8 gelegt ist.

Fig. 8 eine Draufsicht auf die Kammelektroden des Feuchtigkeitsfühlers von Fig. 7,

Fig. 9a und 9b eine Draufsicht auf eine andere Ausführungsform eines Feuchtigkeitsfühlers mit Kammelektroden und

Fig. 10a bis 10g Schnittansichten des Feuchtigkeitsfühlers von Fig. 9a und 9b in verschiedenen Herstellungsstadien, jeweils entlang der Linie G–H von Fig. 9a und entlang der Linie J–K von Fig. 9b.

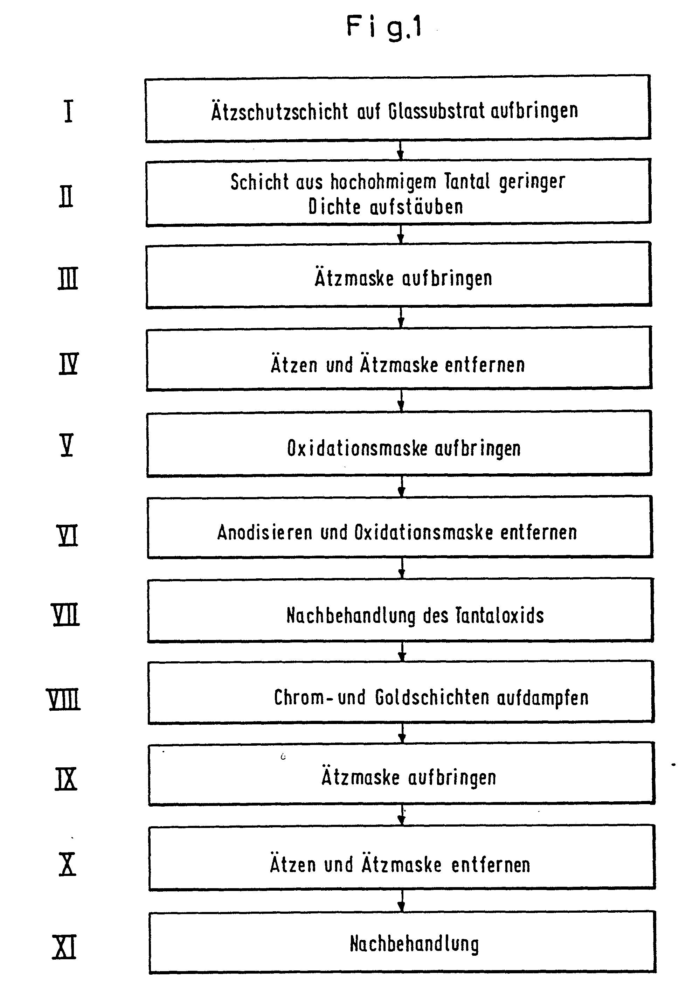

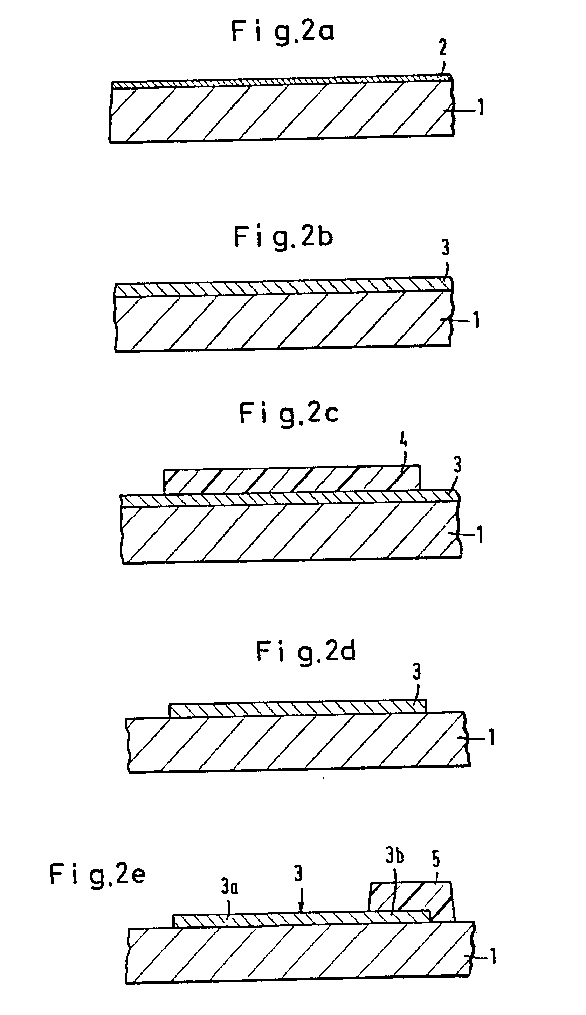

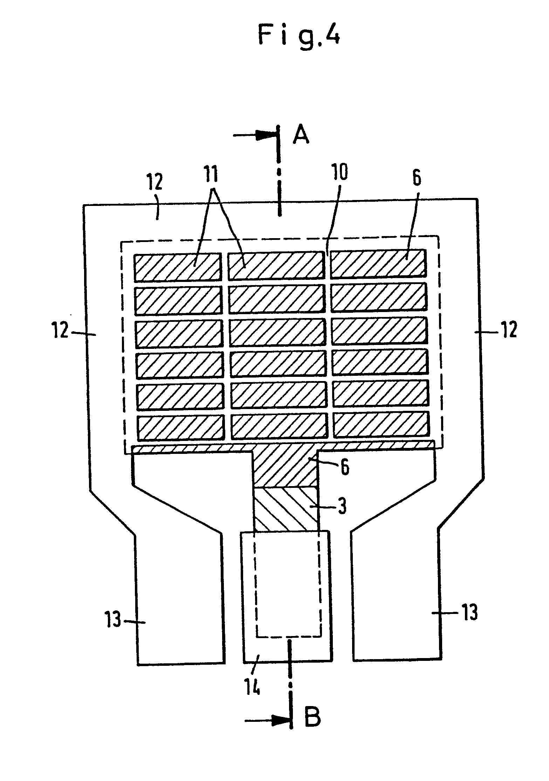

Anhand des Flussdiagramms von Fig. 1 und der Schnittansichten von Fig. 2a bis 2i soll die Herstellung eines bevorzugten Ausführungsbeispiels des Feuchtigkeitsfühlers beschrieben werden, das in Fig. 4 in Draufsicht dargestellt ist.

Im Verfahrensschritt I wird von einem Substrat 1 aus einem feuchtigkeitsunempfindlichen, mechanisch stabilen und vorzugsweise elektrisch isolierenden Material ausgegangen, vorzugsweise aus Glas, Keramik oder einem geeigneten Kunststoff. Wenn das Substrat 1 aus einem Material besteht, das durch die in späteren Verfahrensschritten erfolgenden chemischen Ätzungen angegriffen wird, wird auf die Oberseite des Substrats 1 zunächst eine Ätzschutzschicht 2 aufgebracht (Fig. 2a). Die Ätzschutzschicht 2 wird beispielsweise benötigt, wenn das Substrat 1 aus Glas besteht und im Verfahrensschritt IV eine nasschemische Ätzung mit Flusssäure vorgenommen wird, denn Flusssäure greift Glas an. Die Ätzschutzschicht 2 kann aus Tantaloxid $Ta_2O_5$ bestehen und dadurch gebildet werden, dass auf das Glassubstrat 1, das beispielsweise eine Dicke von 0,6 mm hat, zunächst eine Tantalschicht mit einer Dicke von etwa 150 nm im Vakuum aufgestäubt und anschliessend oxidiert wird. Die Oxidation kann in der Luft bei einer Temperatur von etwa 450°C durchgeführt werden; sie sollte mindestens 5 Stunden, vorzugsweise aber bis zu etwa 16 Stunden dauern. Die dadurch erhaltene Tantaloxidschicht hat eine Dicke von etwa 300nm.

Wenn das Substrat aus einem Material besteht, das durch die Ätzung nicht angegriffen wird, oder wenn die Formgebung auf andere Weise als durch Ätzung erfolgt, kann die Ätzschutzschicht 2 natürlich entfallen; sie ist deshalb in den Schnittansichten von Fig. 2b bis 2i nicht mehr dargestellt.

Im Verfahrensschritt II wird auf das Substrat 1 (oder, falls vorhanden, auf die Ätzschutzschicht 2) eine Schicht 3 aus hochohmigem Tantal geringer Dichte durch Kathodenzerstäubung (Sputtern) aufgebracht (Fig. 2b). Eine Schicht aus hochohmigem Tantal geringer Dichte entsteht beim Aufstäuben unter bestimmten Bedingungen, wobei der wichtigste Parameter die niedrige Beschleunigungsspannung der Argonionen ist. Diese Beschleunigungsspannung liegt auf jeden Fall wesentlich niedriger als die Beschleunigungsspannung, die normalerweise zum Aufstäuben von massivem Tantal in der $\alpha$-Modifikation oder in der $\beta$-Modifikation angewendet wird. Bei einer vorhandenen Hochfrequenzanlage, die mit einer Frequenz von etwa 13 MHz betrieben wurde, wurde beispielsweise eine Beschleunigungsspannung von etwa 100 V angewendet. Der Gasdruck war dabei auf etwa 5 bis $10 \cdot 10^{-2}$ mbar und die Substrattemperatur auf etwa 20°C eingestellt. Auch bei grösseren Gleichstromanlagen mit unselbständigem DC-Plasma kann die Beschleunigungsspannung in der Grössenordnung von 100 bis 200 V liegen, wobei der Gasdruck bis auf $1 \cdot 10^{-3}$ mbar verringert und die Substrattemperatur auf 200°C erhöht werden kann.

Auf alle Fälle werden je nach der vorhandenen Anlage die Parameter beim Aufstäuben so eingestellt, dass die in der angelsächsischen Literatur unter der Bezeichnung «low density»-Tantal bekannte Modifikation von hochohmigem, porösem Tantal geringer Dichte erhalten wird. Während massives Tantal am Stück (Bulk) eine Dichte von 16,6 g/cm³ und einen spezifischen Wiederstand von 13 $\mu\Omega$cm, die $\alpha$-Modifikation eine Dichte von 15,6 g/cm³ und einen spezifischen Widerstand von 25 bis 50 $\mu\Omega$cm und die $\beta$-Modifikation eine Dichte von 15,9 g/cm³ und einen spezifischen Widerstand von 180 bis 220 $\mu\Omega$cm haben, liegt die Dichte der hochohmigen, porösen Modifikation, je nach den Aufstäubebedingungen, unter 14 g/cm³, insbesondere zwischen etwa 11 und 13 g/cm³, und der spezifische Widerstand kann sehr hohe Werte annehmen. Bisher wurden bereits Werte des spezifischen Widerstands erreicht, die bis zu 5000 $\mu\Omega$cm betrugen, doch sind Werte bis zu 40 000 $\mu\Omega$cm möglich. Mit den zuvor angegebenen Paramtern beim Sputtern wird ein spezifischer Widerstand von etwa 4000 bis 5000 $\mu\Omega$cm erreicht.

Die Dicke der Schicht 3 aus hochohmigem porösem Tantal liegt vorzugsweise zwischen 100 und 400 nm und kann beispielsweise 200 bis 300 nm betragen.

Es ist möglich, während des Aufstäubens der Tantalschicht 3 eine Dotierung mit Stickstoff oder Sauerstoff vorzunehmen, um einen gewünschten Temperaturkoeffizienten der Kapazität und/oder des spezifischen Widerstands der später gebildeten Tantaloxidschicht einzustellen.

Die Verfahrensschritte III und IV dienen der Formgebung der Grundelektrode. Zu diesem Zweck wird im Verfahrensschritt III auf die Tantalschicht 3 eine Ätzmaske 4 aufgebracht. Dies kann in der üblichen Weise auf photolithographischem Wege erfolgen, indem die ganze Oberfläche mit einer Photolackschicht von 2 bis 3 $\mu$m Dicke bedeckt wird, der Photolack dann durch eine Schablone belichtet, entwickelt und gehärtet wird und schliesslich der nicht gehärtete Teil des Photolacks entfernt wird (Fig. 2c).

Im Verfahrensschritt IV wird das nicht von der Ätzmaske 4 bedeckte Tantal der Schicht 3 durch nasschemische Ätzung entfernt. Hierzu kann ein Gemisch aus Fluss- und Salpetersäure verwendet werden, das folgende Zusammensetzung hat:

2 Teile konz. $HNO_3$
1 Teil 48% HF
1 Teil Wasser

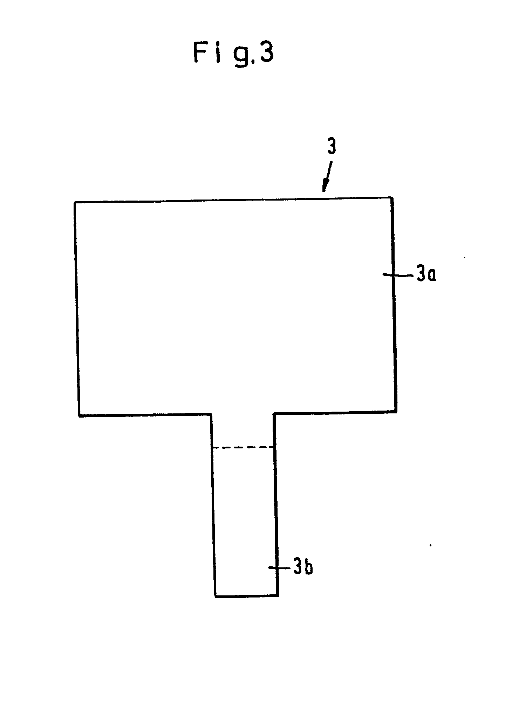

Nach dem Ätzen und Entfernen der Ätzmaske 4 ist die in Fig. 2d dargestellte Struktur erhalten, wobei die Schicht 3 aus hochohmigem Tantal geringer Dichte den in Fig. 3 dargestellten Umriss hat.

In den Verfahrensschritten V und VI wird die feuchtigkeitsempfindliche Schicht aus Tantaloxid $Ta_2O_5$ durch anodische Oxidation eines Teils des hochohmigen porösen Tantals der Schicht 3 gebildet.

Zu diesem Zweck wird im Verfahrensschritt V auf die Tantalschicht 3 eine Oxidationsmaske 5 aufgebracht (Fig. 2e), die den für die Bildung der Tantaloxidschicht bestimmten Teil 3a der Schicht 3 freilässt und den für den Anschluss der Grundelektrode benötigten Ansatz 3b der Tantalschicht 3 bedeckt (Fig. 3). Die Oxidationsmaske kann wieder auf photolithographischem Wege unter Verwendung von Photolack in der zuvor angegebenen Weise gebildet werden, vorzugsweise mit einer Dicke von etwa 10 bis 20 $\mu$m.

Im Verahrensschritt VI erfolgt dann die Oxidation durch Anodisieren in wässrigem Elektrolyt. Hierfür kann beispielsweise eine 0,01%ige Zitronensäure verwendet werden, wobei die Tantalschicht 3 an den Pluspol der Spannungsquelle gelegt wird.

Da die Oxidation nicht an massivem Tantal durchgeführt wird, sondern an hochohmigem porösem Tantal, ist auch das erhaltene Tantaloxid wesentlich lockerer und poröser als normales Tantaloxid. Dieser poröse Tantaloxid ist besonders feuchtempfindlich, wobei sich sowohl die Dielektrizitätskonstante als auch der spezifische Widerstand in Abhängigkeit von der aufgenommenen Feuchtigkeit stark ändern. Auf der anderen Seite weist dieses poröse Tantaloxid aber die gleiche elektrische Langzeitstabilität und chemische Beständigkeit wie normales Tantaloxid auf.

Während die übliche Anodisation mit konstanter Stromdichte von etwa 0,1 bis 1 mA/cm² durchgeführt wird, hat es sich herausgestellt, dass es im vorliegenden Fall günstig ist, die Anodisation mit einer wesentlich stärkeren Stromdichte zu beginnen und diese im Verlauf der Anodisation auf 1/20 bis 1/100 des Anfangswerts zu verringern. Beispielsweise kann mit einer konstanten Stromdichte von 10 mA/cm² anodisiert werden, bis die Anodisationsspannung einen Wert von 50 V erreicht hat; danach wird die Stromdichte auf 0,1 mA/cm² verringert und die Anodisation mit dieser konstanten Stromdichte fortgesetzt, bis eine Anodisationsspannung von 150 V erreicht wird. Anschliessend wird bei der konstanten Spannung von 150 V ausanodisiert, bis die Stromdichte auf etwa 5 bis 1 µA/cm² gefallen ist. Durch diese Massnahme wird ein besonders lockeres Oxid an der Oberfläche erzeugt.

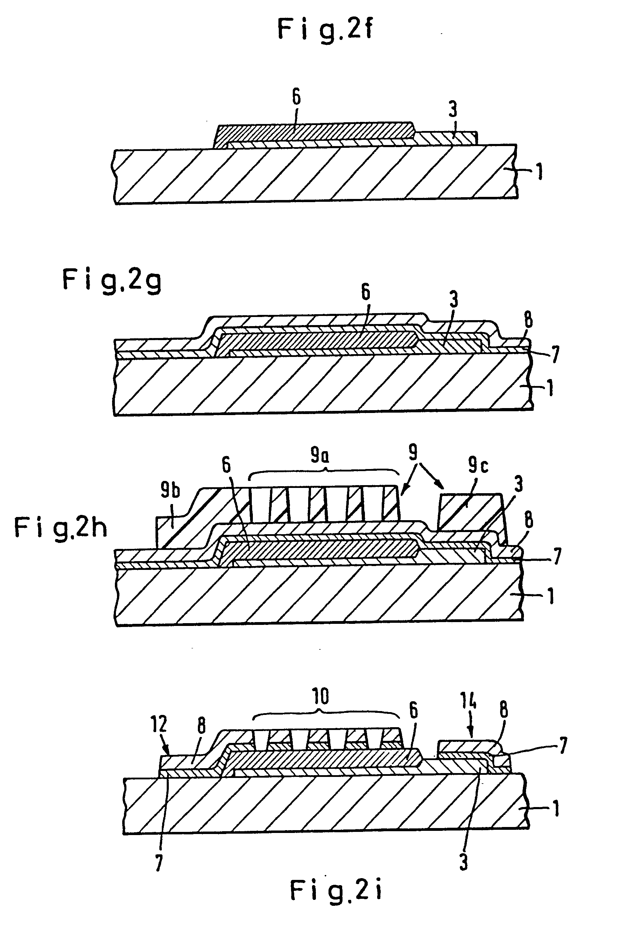

Die Oxidation wird nur über einen Teil der Dikke des Abschnitts 3a der Schicht 3 durchgeführt, so dass unter der erhaltenen Tantaloxidschicht 6 (Fig. 2f) eine Schicht aus dem hochohmigen porösen Tantal verbleibt, das als Grundelektrode dient. Das Tantaloxid bläht sich bei der Oxidation etwa auf die doppelte Dicke des oxidierten Metalls auf. Im allgemeinen wird eine Dicke der Tantaloxidschicht zwischen etwa 100 nm und 400 nm angestrebt. Wenn die Tantalschicht 3 ursprünglich eine Dicke von 300 nm hat, kann die Oxidation über die Hälfte dieser Dicke durchgeführt werden, so dass eine Tantaloxidschicht 6 von etwa 300 nm Dicke erhalten wird, unter der sich eine Grundelektrode aus hochohmigem porösem Tantal mit einer Dicke von etwa 150 nm befindet. Der von der Oxidationsmaske 5 bedeckte Abschnitt 3b der Tantalschicht 3 wird nicht oxidiert und behält somit seine ursprüngliche Dicke bei.

Nach dem Entfernen der Oxidationsmaske 5 hat die Struktur das in Fig. 2f dargestellte Aussehen.

Im Verfahrensschritt VII erfolgt eine Nachbehandlung des Oxids, insbesondere zum Zweck der Reinigung und Stabilisierung. Hierfür bieten sich verschiedene Möglichkeiten. Beispielsweise kann zunächst eine Temperung in Schutzgas erfolgen. Als besonders günstig hat sich eine Reinigung der Oberflächen durch Sputterätzen erwiesen. Zu diesem Zweck wird die Oberfläche mit Argonionen unter einer verhältnismässig geringen Beschleunigungsspannung beschossen, wodurch die oberste Schicht abgetragen wird. Es genügt schon ein geringer Schichtabtrag in der Grössenordnung von 20 nm. Aufgrund der unterschiedlichen Ätzraten tritt eine Hervorhebung von Korngrenzen auf. Die angewendete Argonionen-Beschleunigungsspannung kann etwa 1000 bis 1500 V betragen; diese Spannung liegt ganz wesentlich unter den bei Ionen-Implantation angewendeten Spannungen, die in der Grössenordnung von 20 000 V liegen. Es findet somit keine Ionen-Implantation statt. Das Sputterätzen kann mit einer Leistung von etwa 0,05 bis 0,1 W/cm² für eine Zeitdauer von etwa 2 bis 4 Minuten durchgeführt werden. Das Reinigen und Aufrauhen der Oberfläche ergibt insbesondere eine bessere Haftung der später aufgetragenen Deckelektrode.

Zur Nachbehandlung kann die Oxidschicht ferner bei einer Temperatur von 150 bis 200°C für eine Zeit von etwa 30 Minuten ausgeheizt werden, insbesondere um Feuchtigkeitsrückstände auszutreiben.

Der Verfahrensschritt VII kann teilweise mit anderen Verfahrensschritten zusammengefasst werden. Beispielsweise kann das Sputterätzen und das Ausheizen in der Aufdampfanlage erfolgen, in der anschliessend die Metallschichten für die Deckelelektrode aufgedampft werden.

Das Aufdampfen der Metallschichten für die Deckelelektrode erfolgt im Verfahrensschritt VIII. Als Leitermaterial für die Deckelelektrode wird vorzugsweise Gold aufgedampft. Da aber Gold auf dem Tantaloxid schlecht haftet, wird zunächst auf die ganze Oberfläche eine Chromschicht 7 aufgedampft (Fig. 2g) und diese anschliessend durch Aufdampfen mit einer Goldschicht 8 bedeckt. Anstelle von Chrom kann für die Haftschicht auch Titan oder Tantal verwendet werden. Im Falle von Tantal als Haftschicht erhält man einen symmetrisch aufgebauten Feuchtefühler, da die Tataloxidschicht zwischen zwei Tantalschichten liegt. Dadurch ergeben sich bessere Eigenschaften, insbesondere eine geringere Polarität und eine höhere Durchbruchspannung. Allerdings empfiehlt es sich dann, zwischen die Tantalschicht und Goldschicht eine Chromschicht einzufügen.

In den Verfahrensschritten IX und X wird die Deckelelektrode geätzt, um ihr die gewünschte Form und Struktur zu erteilen. Zu diesem Zweck wird im Verfahrensschritt IX eine Ätzmaske aufgebracht, welche die nicht zu entfernenden Teile der Metallschicht 7, 8 bedeckt, damit sie von dem Ätzmitel nicht angegriffen werden. Das Aufbringen der Ätzmaske kann wieder in der bekannten Weise auf photolithographischem Wege erfolgen, indem eine Photolackschicht aufgebracht, durch eine dem gewünschten Elektrodenumriss entsprechende Schablone belichtet, entwickelt und gehärtet wird.

Im Verfahrensschritt X erfolgt dann das Ätzen der Metallschicht und das anschliessende Entfernen der Ätzmaske.

Das Ätzen kann in zwei aufeinanderfolgenden Stufen erfolgen, wobei in der ersten Stufe das Gold der Schicht 8 und in der zweiten Stufe das Chrom der Schicht 7 weggeätzt wird. Für die nasschemische Ätzung können die folgenden Ätzmittel verwendet werden:

| | |
|---|---|
| 1. Stufe (Gold): | 50 g Ammoniumcersulfat |
| | 30 ml $H_2SO_4$ |
| | 900 ml $H_2O$ |
| | |
| 2. Stufe (Chrom): | 400 g Kaliumjodid |
| | 100 g Jod |
| | 400 ml $H_2O$ |

Schliesslich erfolgt in der Stufe XI vorzugsweise eine Nachbehandlung des fertigen Fühlers zur Stabilisierung durch künstliche Alterung. Dies kann beispielsweise durch eine Temperung in Luft bei 150°C für eine Dauer von 2 Stunden erfolgen. Falls in der Stufe II das hochohmige Tantal geringer Dichte mit Gas dotiert wird, kann die Temperatur beim Tempern bis auf 300°C erhöht werden.

Die Dicke der in der Stufe VIII aufgedampften Chrom- und Goldschichten 7, 8 hängt von der endgültigen Struktur der Deckelelektrode ab, die in den Stufen IX und X erzielt wird. Entsprechend einer bei Feuchtigkeitsfühlern mit Aluminiumoxidschicht bekannten Technik kann die Deckelektrode auch im vorliegenden Fall als zusammenhängende Metallschicht ausgebildet werden, die die ganze Oberfläche der Tantaloxidschicht bedeckt. Sie muss dann so dünn sein, dass sie feuchtigkeitsdurchlässig ist. Zu diesem Zweck wird die Chromschicht 7 mit einer Dicke von etwa 5 nm und die Goldschicht 8 mit einer Dicke von etwa 10 nm aufgebracht.

Bei Verwendung einer solchen Deckelelektrode in Form einer dünnen, zusammenhängenden, feuchtigkeitsdurchlässigen Metallschicht ist eine Nachbehandlung durch Temperung im Verfahrensschritt XI nicht möglich, da die dünne Chrom-Goldschicht nicht stabil genug ist und aufreisst.

Aus diesem Grund wird bei dem hier beschriebenen Ausführungsbeispiel eine neuartige Deckelektrode mit Gitterstruktur gebildet, wie sie schematisch in Fig. 4 dargestellt ist. Diese Deckelelektrode 10 besteht aus sich kreuzenden Längs- und Querstegen, zwischen denen Gitterfenster 11 bestehen, in denen das Tantaloxid der Schicht 6 freiliegt, so dass die Feuchtigkeit der Umgebung unmittelbar Zugang findet. Es ist jedoch zu bemerken, dass in Fig. 4 der Deutlichkeit wegen die Gitterfenster 11 übertrieben gross dargestellt sind und demzufolge die Anzahl der dargestellten Gitterfenster wesentlich kleiner als in Wirklichkeit ist. Wenn bei dem dargestellten Ausführungsbeispile die aktive Fläche des Feuchtigkeitsfühlers eine Länge von 7 mm und eine Breite von 4 mm hat, kann die Gitterelektrode 10 etwa 9000 Gitterfenster mit einer Länge von etwa 150 µm und einer Breite von etwa 20 µm haben. Die Gesamtfläche der Gitterfenster wird dabei möglichst gross im Verhältnis zu der von den Metallstegen des Giters bedeckten Fläche gehalten.

Die Kontaktierung der Gitterelektrode 10 von Fig. 4 erfolgt durch angeformte Randbereiche 12, die bei dem dargestellten Beispiel in Kontaktflächen 13 enden, die zu beiden Seiten des Grundelektrodenanschlusses 14 liegen.

Da bei Verwendung einer Elektrode mit Gitterstuktur die Feuchtigkeit nicht mehr durch das Metall hindurch zur Tantaloxidschicht dringen muss, können die Metallschichten 7, 8 im Verfahrensschritt VIII mit wesentlich grösserer Dicke aufgebracht werden als im Fall einer dünnen, zusammenhängenden, feuchtigkeitsdurchlässigen Deckelelektrode. Beispielsweise kann der Chromschicht 7 eine Dicke von etwa 0,1 µm und der Goldschicht 8 eine Dicke von etwa 0,2 bis 0,5 µm erteilt werden. Diese Dicke ergibt einerseits eine grössere mechanische Festigkeit der Deckelelektrode, die insbesondere auch die Temperung im Verfahrensschritt XI ohne Gefahr einer Beschädigung ermöglicht; andererseits ist es möglich, die Deckelelektrodenanschlüsse 12, 13 und den Grundelektrodenanschluss 14 aus den gleichen Metallschichten in einem Arbeitsgang mit der Deckelelektrode 10 zu bilden.

Fig. 2h zeigt die Ätzmaske 9, die zur Bildung der Elektrodenstruktur von Fig. 4 verwendet wird. Der mit Durchbrüchen versehene Abschnitt 9a ergibt die eigentliche Deckelelektrode 10 mit den Gitterstegen und den Gitterfenstern. Der sich anschliessende Abschnitt 9b bedeckt die Randbereiche 12 und die Deckelelektrodenanschlüsse 13. Ein isolierter Abschnitt 9c definiert den Grundelektrodenanschluss 14.

Nach dem Ätzen und Entfernen der Ätzmaske wird die in Fig. 2i im Schnitt gezeigte Struktur erhalten, die einem Schnitt durch den fertigen Feuchtigkeitsfühler entlang der Linie A–B von Fig. 4 entspricht.

Die Verwendung einer Elektrode mit Gitterstruktur hat sich noch aus einem weiteren Grund als günstig herausgestellt. Es wurde nämlich festgestellt, dass die für die Feuchtigkeitsmessung wesentlichen Erscheinungen nicht gleichmässig auf der ganzen Fläche der feuchtigkeitsempfindlichen Tantaloxidschicht 6 auftreten, sondern bevorzugt entlang den Kanten der Deckelelektrode. Die Gitterstruktur ergibt eine im Verhältnis zur Fläche sehr grosse Kantenlänge. Beispielsweise hat bei dem zuvor angegebenen Zahlenbeispiel die Deckelelektrode 10 mit etwa 9000 Fenstern von 150 µm Länge und 20 µm Breite eine gesamte Kantenlänge von 3 m auf einer Fläche von $4 \cdot 7 = 28$ mm$^2$. Dies entspricht einer Kantenlänge von mehr als 10 m/cm$^2$. Durch weitere Verfeinerung der Gitterstruktur lässt sich diese Kantenlänge noch wesentlich erhöhen.

Die Elektrode mit Gitterstruktur muss natürlich nicht die in Fig. 4 dargestellte Form haben; sie kann beispielsweise auch durch eine Lochmaske mit runden Löchern gebildet sein.

Das zuvor beschriebene Herstellungsverfahren lässt sich natürlich in verschiedener Hinsicht abändern, ohne dass der grundlegende Gedanke hinfällig wird, als Material der feuchtigkeitsempfindlichen Schicht das Oxid des hochohmigen Tantals geringer Dichte zu verwenden.

So kann beispielsweise im Verfahrensschritt II die Schicht 3 aus hochohmigem Tantal geringer Dichte anstatt durch Aufstäuben auch durch Aufdampfen unter geeigneten Bedingungen aufgebracht werden. Die übrigen Verfahrensschritte werden dadurch offensichtlich nicht verändert.

Es ist auch möglich, die feuchtigkeitsempfindliche Tantaloxidschicht unmittelbar auf das Substrat aufzubringen, anstatt sie durch nachträgliche Oxidation einer zunächst auf dem Substrat gebildeten Schicht aus hochohmigem Tantal geringer Dichte zu bilden. Beispielsweise kann die Tantaloxidschicht durch eine Oxidation während des Aufstäubens oder Aufdampfens von metallischem Tantal in einer sauerstoffhaltigen Atmosphäre unmittelbar auf dem Substrat erhalten werden. Es ist sogar möglich, eine Tantaloxidschicht mit einer dem Oxid hochohmigen Tantals geringer Dichte entsprechenden Struktur dadurch zu erhalten, dass unmittelbar aus einer Tantaloxidquelle aufgestäubt oder aufgedampft wird.

In den zuletzt genannten Fällen muss natürlich vor dem Aufbringen der Tantaloxidschicht eine Grundelektrode auf dem Substrat gebildet werden, wenn ein Feuchtigkeitsfühler mit der zuvor beschriebenen Elektrodenstruktur erhalten werden soll.

Eine andere Abänderung des zuvor beschriebenen Herstellungsverfahrens besteht darin, dass die Formgebung der Deckelektrode und der Elektrodenanschlüsse nicht durch nachträgliches Ätzen der aufgebrachten Chrom- und Goldschichten erfolgt, sondern nach der sogenannten «lift off»-Technik unter Verwendung einer zuvor aufgebrachten Maske.

Bei dieser Technik wird auf die nach dem Verfahrensschritt VII erhaltene Struktur (Fig. 2f) eine Maske aufgebracht, die das Negativ der in Fig. 2h dargestellten Maske 9 ist, so dass nur die Stellen frei bleiben, wo später die Chrom- und Goldschichten benötigt werden. Anschliessend werden die Schichten aus Chrom und Gold aufgedampft, die an den freigelassenen Stellen auf der Tantaloxidschicht 6, der Tantalschicht 3 und dem Substrat 1 aufliegen, im übrigen aber die Maske bedecken.

Schliesslich wird die Maske aus Photolack samt dem darüberliegenden Chrom und Gold weggelöst. Das Lösungsmittel (Aceton) dringt an den dünn bedampften Kanten der Photolackmaske durch das Chrom und Gold hindurch.

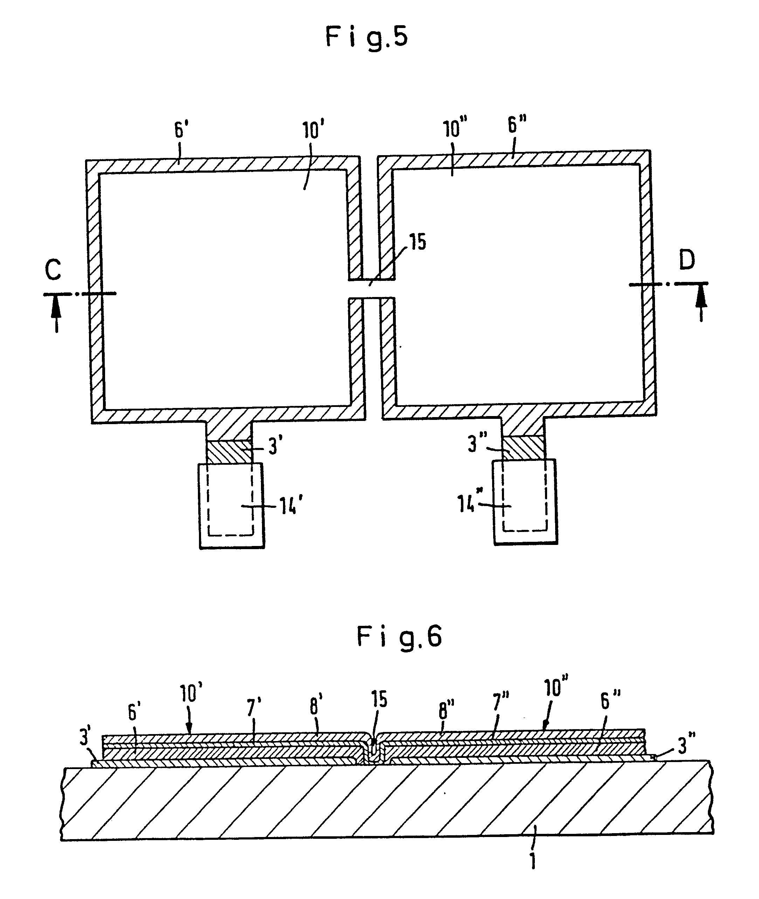

Ein anderes Ausführungsbeispiel eines Feuchtigkeitsfühlers, der mit dem zuvor beschriebenen Verfahren hergestellt werden kann, ist in Fig. 5 in Draufsicht und in Fig. 6 im Schnitt dargestellt. Dieser Feuchtigkeitsfühler entspricht im Prinzip zwei nebeneinanderliegenden Feuchtigkeitsfühlern der in Fig. 4 dargestellten Art, deren Deckelelektroden miteinander verbunden sind, jedoch keine Anschlüsse aufweisen. Zum besseren Vergleich sind die entsprechenden Teile mit den gleichen Bezugszeichen wie in den Figuren 2, 3 und 4 bezeichnet, jedoch für den einen Feuchtigkeitsfühler mit einem Indexstrich und für den anderen Feuchtigkeitsfühler mit zwei Indexstrichen versehen. Man erkennt in Fig. 6 das gemeinsame Substrat 1, auf dem die beiden Feuchtigkeitsfühler in geringem Abstand nebeneinander gebildet sind, die Schichten 3' und 3" aus hochohmigem Tantal geringer Dichte, die die Grundelektroden bilden, die Schichten 6' und 6", die aus dem Oxid des hochohmigen Tantals geringer Dichte bestehen, und die aus der Chromschicht 7', 7" und der Goldschicht 8', 8" gebildeten Deckelelektroden 10', 10". Beim Ätzen der Deckelelektroden 10',

10" ist ein Verbindungsabschnitt 15 zwischen den beiden Deckelelektroden 10' und 10" stehengelassen worden. Dieser Verbindungsabschnitt wird möglichst schmal gehalten, um die Wahrscheinlichkeit eines Kurzschlusses zwischen Deckelelektroden und Grundelektroden zu verringern.

Die gleichen Teile sind auch in Fig. 5 zu erkennen, wo auch noch die Grundelektrodenanschlüsse 14', 14" dargestellt sind.

Die Elektroden 10', 10" können wiederum dünne, zusammenhängende, feuchtigkeitsdurchlässige Metallschichten sein, oder, wie in Fig. 4, als Gitterelektroden ausgebildet sein.

Der Vorteil der Ausführungsform von Fig. 5 und 6 besteht darin, dass kein Anschluss an den Deckelelektroden erforderlich ist. Der Anschluss erfolgt an den beiden Grundelektrodenanschlüssen 14', 14". Die beiden Feuchtigkeitsfühler verhalten sich wie zwei in Reihe geschaltete Kondensatoren.

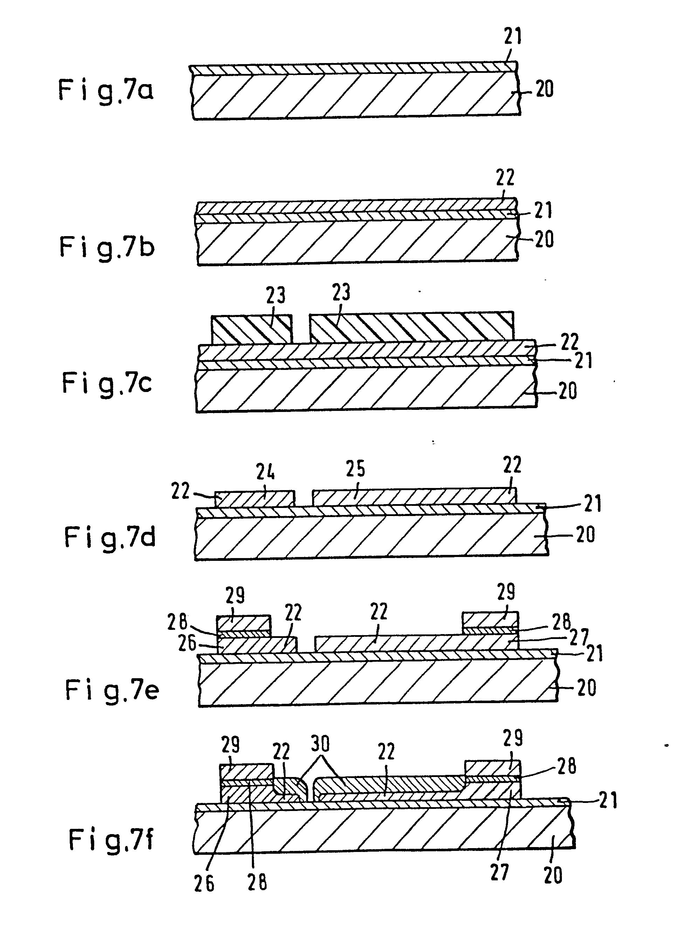

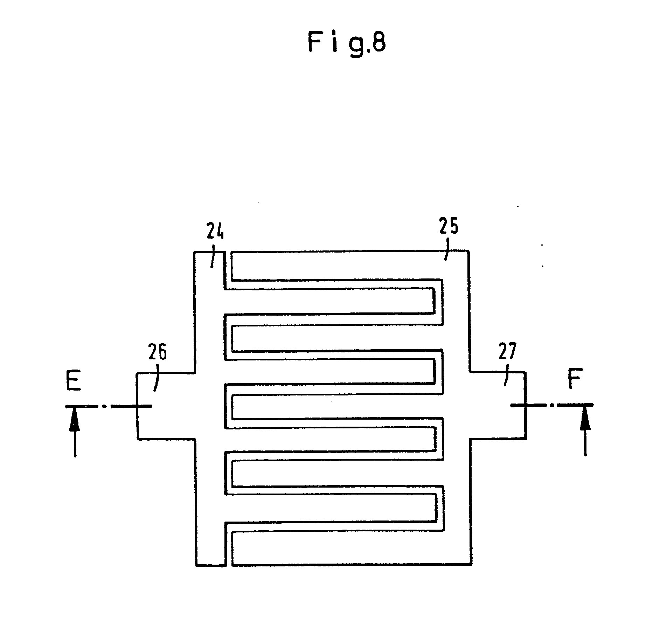

Während die bisher beschriebenen Feuchtigkeitsfühler den Aufbau von «vertikalen» Kondensatoren haben, deren Elektroden unter Einfügung einer dielektrischen Schicht übereinanderliegen, ist in den Figuren 7 und 8 ein Ausführungsbeispiel eines «horizontalen» Feuchtigkeitsfühlers dargestellt, der zwei in einer Ebene liegende Kammelektroden mit ineinandergreifenden Fingern hat. Die Herstellung dieses Feuchtigkeitsfühlers erfolgt mit einer anderen Reihenfolge und einigen Abänderungen der Verfahrensschritte von Fig. 1.

Zunächst wird, wie im Verfahrensschritt I, auf dem Substrat 20 (Fig. 7a) eine Schicht 21 aus Tantaloxid gebildet, die auch die Rolle einer Ätzschutzschicht übernehmen kann, wenn diese im Hinblick auf das Material des Substrates 20 und das angewendete Ätzverfahren erforderlich ist. Vorzugsweise besteht hier die Schicht 21 aus dem Oxid des hochohmigen Tantals geringer Dichte. Im Verfahrensschritt I werden daher die Parameter beim Aufstäuben des Tantals so eingestellt, dass sich auf dem Substrat 20 eine Schicht von hochohmigem Tantal geringer Dichte bildet, das beim anschliessenden Oxidieren in das gewünschte feuchtigkeitsempfindliche Tantaloxid umgewandelt wird.

Als nächstes wird auf die Tantaloxidschicht 21 eine Schicht 22 aus hochohmigem Tantal geringer Dichte gemäss dem Verfahrensschritt II aufgebracht (Fig. 7b).

Dann wird entsprechend dem Verfahrensschritt III auf der Tantalschicht 22 eine Ätzmaske 23 aus Photolack gebildet (Fig. 7c), welche die Struktur der gewünschten Kammelelektroden 24, 25 (Fig. 8) mit den Elektrodenanschlüssen 26, 27 definiert.

Nach dem Ätzen und dem Entfernen der Ätzmaske gemäss dem Verfahrensschritt IV ist dann die in Fig. 7d dargestellte Struktur mit den an den Oberfläche freiligenden Kammelektroden 24, 25 aus hochohmigem Tantal geringer Dichte erhalten.

Im nächsten Verfahrensschritt werden auf die Elektrodenanschlüsse 26 und 27 eine Chromschicht 28 und eine Goldschicht 29 aufgedampft (Fig. 7e), wodurch die Anschlusskontakte erhalten werden. Dies kann beispielsweise in dem zuvor beschriebenen «lift off»-Verfahren erfolgen, indem vor dem Aufdampfen die ganze Oberfläche der Struktur mit Ausnahme der zu bedampfenden Anschlüsse 26 und 27 mit einer Maske als Photolack bedeckt werden, die nach dem Aufdampfen der Metallschichten weggelöst wird.

Als letzter Verfahrensschritt erfolgt eine Nachbehandlung der Kammelektroden, die eine Oberflächenoxidation der nicht von den Metallschichten 28 und 29 bedeckten Flächen des hochohmigen Tantals niedriger Dichte zur Folge hat. Dies kann beispielsweise durch Tempern in Luft bei 150°C für die Dauer einer Stunde erfolgen. Dadurch überziehen sich die freiliegenden Flächen der Kammelektroden 24, 25 mit einer Schicht 30 aus dem Oxid des hochohmigen Tantals geringer Dichte (Fig. 7f).

In den auf diese Weise erhaltenen Struktur sind die Kammelektroden 24, 25 allseitig von dem Oxid des hochohmigen Tantals geringer Dichte umgeben.

Die Kammelektroden sind in Fig. 8 natürlich vereinfacht dargestellt. In Wirklichkeit ist die Anzahl der ineinandergreifenden Finger sehr viel grösser, um wieder eine möglichst grosse Kantenlänge zu erzielen.

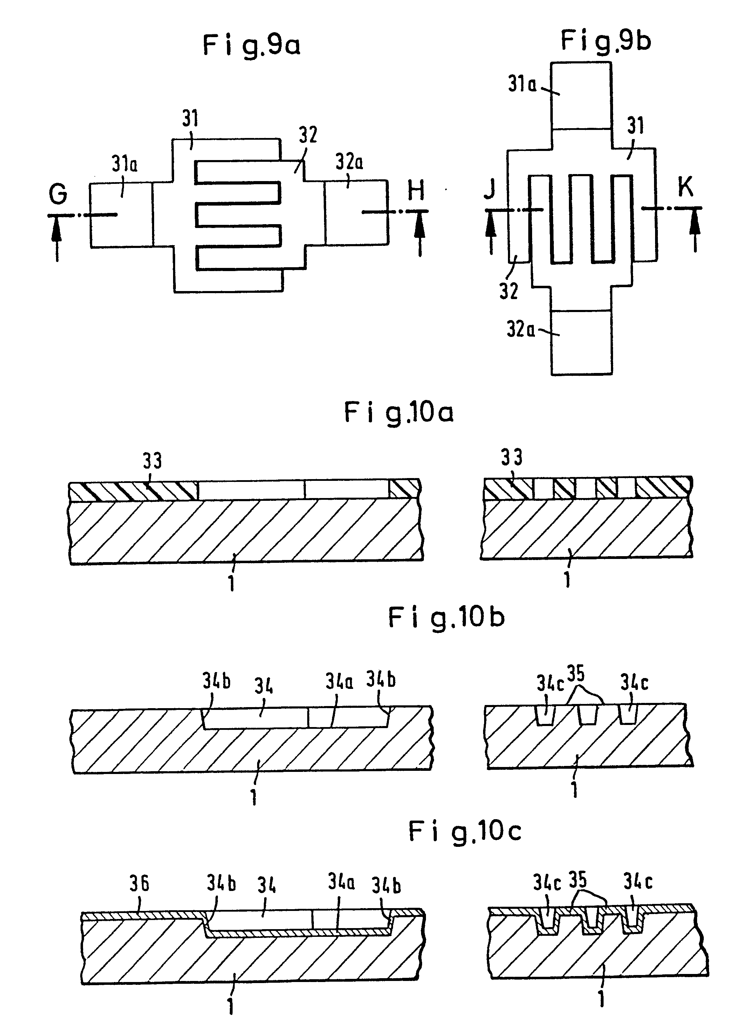

In Fig. 9a und 9b ist eine andere Ausführungsform eines Feuchtigkeitsfühlers mit zwei ineinandergreifenden Kammelektroden 31 und 32 dargestellt, dessen Herstellung anhand der Schnittansichten von Fig. 10a bis 10g beschrieben wird. Die Draufsichten von Fig. 9a und 9b sind identisch; sie sind lediglich gegeneinander um 90° verdreht, um die Schnittansichten der Figuren 10a bis 10g besser verständlich zu machen, die jeweils entlang der Linie G–H von Fig. 9a und entlang der Linie J–K von Fig. 9b gelegt sind.

Im ersten Verfahrensschritt wird auf das Substrat 1, das aus Borsilikatglas besteht, eine Ätzmaske 33 aufgebracht, die nur die von der einen Kammelektrode 32 eingenommene Fläche frei lässt. Die Ätzmaske kann wieder in der bereits geschilderten Weise aus Photolack gebildet werden. Anschliessend wird das Substrat 1, beispielsweise mit Flusssäure, geätzt, so dass nach dem Entfernen der Ätzmaske die in Fig. 10b dargestellte Struktur erhalten ist, die aus dem Substrat 1 mit einer eingeätzten Vertiefung 34 besteht, die die Form der Kammelektrode 32 hat. Die Tiefe der Vertiefung beträgt etwa 1 μm. Man erkennt in Fig. 10b den Boden 34a und die Begrenzungswände 34b der Vertiefung. Der Neigungswinkel der Begrenzungswände 34b hängt von dem angewendeten Ätzverfahren ab. Bei nasschemischer Ätzung mit Flusssäure beträgt der Neigungswinkel etwa 45°; beim Plasma-Ätzen erreicht man wesentlich steilere Böschungswinkel.

Ferner erkennt man in Fig. 10b die den Fingern der Kammelektrode entsprechenden schmalen, langestreckten Abschnitte 34c der Vertiefung 34 und die zwischen diesen Abschnitten stehengebliebenen Stege 35, deren Oberseite die Höhe der ursprünglichen Oberfläche des Substrats 1 hat.

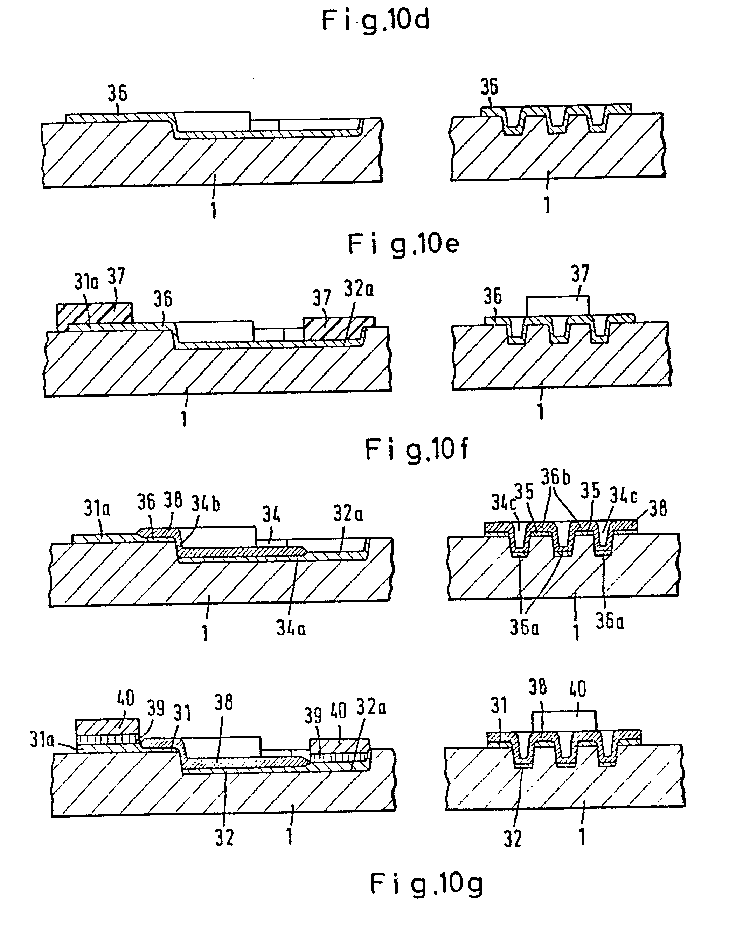

Es ist an dieser Stelle zu bemerken, dass die Darstellung in den Figuren 9 und 10 der Deutlichkeit wegen stark vereinfacht ist. Insbesondere sind die Dicken der verschiedenen Bestandteile sehr übertrieben. Die Breite der den Fingern entsprechenden Abschnitte 34c und die Breite der dazwischenliegenden Stege 35 beträgt jeweils etwa 5 bis 10 μm; sie ist also in Wirklichkeit 5- bis 10mal so gross wie die Tiefe der Vertiefung 34. Ferner ist die Anzahl der Finger der Kammelektroden in Wirklichkeit sehr viel grösser als in der Darstellung.

Im nächsten Verfahrensschritt wird auf die ganze Oberseite des Substrats 1 eine Schicht aus hochohmigem Tantal geringer Dichte nach einem der zuvor geschilderten Verfahren aufgebracht, beispielsweise durch Aufstäuben (Sputtern) mit entsprechender Einstellung der Parameter. Die auf diese Weise erhaltene Tantalschicht 36 (Fig. 10c) hat die zuvor angegebenen Werte der Dichte und des spezifischen Widerstands. Sie wird mit einer Dicke aufgetragen, die auf der Oberseite des Substrats 1 und auf dem Boden 34a der Vertiefung 34 etwa 0,2 bis 0,4 μm beträgt. An den steilen Begrenzungswänden 34b der Vertiefung 34 bildet sich dagegen eine wesentlich geringere Dicke der Schicht 36 aus. Diese Dicke hängt vom angewendeten Aufstäubeverfahren, der Substrathalterung und dem Neigungswinkel der Begrenzungswände 34b ab; sie ist weniger als halb so dick wie die zuvor angegebene Dicke.

Im nächsten Verfahrensschritt wird auf die Struktur von Fig. 10c eine Ätzmaske aufgebracht, welche die von den beiden Kammelektroden 31, 32 und ihren Anschlusskontakten 31a, 32a (Fig. 9a, 9b) eingenommene Fläche bedeckt. Diese Ätzmaske kann wiederum in der geschilderten Weise aus Photolack gebildet werden. Das nicht von der Ätzmaske bedeckte Tantal wird weggeätzt, beispielsweise in der zuvor beschriebenen Weise. Nach dem Entfernen der Ätzmaske erhält man die in Fig. 10d dargestellte Struktur, die sich von derjenigen von Fig. 10c nur dadurch unterscheidet, dass der Umriss der Tantalschicht 36 auf dem Umriss der Elektroden 31, 31 (Fig. 9) begrenzt ist.

Gemäss Fig. 10e wird als nächstes auf die den Anschlusskontakten 31a, 32a entsprechenden Stellen der Tantalschicht 36 jeweils eine Oxidationsmaske 37 aufgebracht.

Anschliessend erfolgt die Oxidation der hochohmigen Tantalschicht 36, vorzugsweise durch die zuvor beschriebenen anodische Oxidation mit Änderung des Flächenstroms. Dadurch wird das hochohmige Tantal geringer Dichte der Schicht 36 an den nicht von der Oxidationsmaske 37 bedeckten Stellen in das entsprechende Oxid umgewandelt, das sich wieder auf etwa die doppelte Dicke des oxidierten Metalls aufbläht. Man erhält dadurch die in Fig. 10f dargestellte Tantaloxidschicht 38, die aus dem Oxid hochohmigen Tantals geringer Dichte besteht. Die Oxidation wird solang durchgeführt, bis das Tantal der Schicht 36 an den Stellen geringer Dicke, die auf den geneigten Begrenzungswänden 34b der Vertiefung 34 liegen, vollständig durchoxidiert ist, sie wird aber abgebrochen, bevor das Tantal auch auf dem Grund 34a der Vertiefung 34 und auf der Oberseite des Substrats 1 vollständig oxidiert ist, so dass an diesen Stellen unter der Tantaloxidschicht 38 eine Schicht aus dem hochohmigen Tantal geringer Dichte bestehen bleibt.

Aus der rechten Schnittansicht von Fig. 10f ist zu erkennen, dass durch diese Massnahme auf dem Boden der Längsabschnitte 34c der Vertiefung 34 streifenartige Abschnitte 36a aus Tantal bestehen bleiben, die von den streifenartigen Abschnitten 36b auf der Oberseite der Stege 35 vollkommen getrennt sind, wobei aber zwischen diesen streifenartigen Abschnitten 36a, 36b eine zusammenhängende Oxidschicht besteht. Die auf dem Boden der Vertiefung 34 liegenden streifenartigen Abschnitte 36a bilden die Finger der Kammelektrode 32, und die auf der Oberseite der Stege 35 liegenden streifenartigen Abschnitte 36b bilden die Finger der Kammelektrode 31.

Man hat somit durch die Oxidation die Formung und gegenseitige Trennung der beiden Kammelektroden aus einer einzigen Tantalschicht unter gleichzeitiger Ausbildung der Tantaloxidschicht erreicht.

Wie bereits erwähnt, ist es hierfür massgeblich, die Oxidation gerade so weit zu treiben, das die Tantalschicht 36 an den auf den Begrenzungswänden 34b liegenden dünnen Stellen vollständig durchoxidiert ist. Der hierfür benötigte Endwert kann leicht kontrolliert werden: Er ist erreicht, wenn die beiden Kammelektroden 31 und 32 voneinander isoliert sind und in diesen beiden Kammelektroden getrennte Anodisierströme fliessen. Schliesslich werden noch auf die Anschlussflächen 31a, 32a der beiden Kammelektroden 31, 32 Metallschichten für die Anschlusskontakte aufgedampft. Dies kann wieder in der zuvor geschilderten Weise dadurch geschehen, dass zunächst eine Aufdampfmaske aus Photolack gebildet wird, die nur die beiden Anschlussflächen 31a, 32a freilässt, und anschliessend zunächst eine Chromschicht 39 und dann eine Goldschicht 40 aufgedampft wird. Nach dem Entfernen der Aufdampfmaske hat der Feuchtigkeitsfühler dann die in Fig. 10g dargestellte fertige Struktur.

Es kann dann wieder die zuvor geschilderte Nachbehandlung des Oxids zur Stabilisierung vorgenommen werden, beispielsweise durch Tempern in Luft.

Auch bei der Herstellung dieses Feuchtigkeitsfühlers können die zuvor beschriebenen Varianten angewendet werden; beispielsweise kann anstelle des Aufdampfens der Chromschicht 39 und der Goldschicht 40 über eine Maske die zuvor erwähnte «lift off»-Technik angewendet werden.

Das anhand der Figuren 9 und 10 erläuterte Verfahren ermöglicht die Herstellung sehr feiner Kammelektroden mit einer grossen Zahl sehr feiner eng nebeneinanderliegender Finger, deren Kanten in sehr geringem Abstand voneinander liegen.

Alle zuvor beschriebenen Feuchtigkeitsfühler werden mit einer geringen Anzahl von einfachen Verfahrensschritten hergestellt, die mit den bei der Herstellung integrierter Dünnschichtschaltungen üblicherweise angewendeten Verfahrensschritten übereinstimmen oder zumindest damit kompatibel sind. Zur Herstellung der Feuchtigkeitsfühler können daher vorhandene Einrichtungen verwendet werden, die für die Herstellung integrierter Dünnschichtschaltungen verwendet werden. Ferner ist es leicht möglich, auf dem gleichen Substrat, das auch den Feuchtigkeitsfühler trägt, die elektronische Auswerteschaltung in integrierter Dünnschichttechnik herzustellen, wobei sogar die Möglichkeit besteht, einen Teil der Verfahrensschritte für die Herstellung des Feuchtigkeitsfühlers und der Auswerteschaltung gleichzeitig durchzuführen. Beispielsweise können die Widerstände der integrierten Dünnschichtschaltung aus dem hochohmigen Tantal geringer Dichte, die Leiterbahnen aus niederohmigem Tantal der $\alpha$- oder $\beta$-Modifikation und die Kondensatordielektrika aus der $\alpha$- oder $\beta$-Modifikation gebildet werden.

Es ist weiterhin möglich, auf dem gleichen Substrat einen Heizwiderstand zu bilden. Ein solcher Heizwiderstand ist zur Verhinderung von Tröpfchenbildung bei Verwendung des Feuchtigkeitsfühlers im Hochfeuchtebereich vorteilhaft.

Der Heizwiderstand kann aus Tantal der $\alpha$- oder $\beta$-Modifikation, aber auch aus hochohmigem Tantal geringer Dichte gebildet sein.

## Patentansprüche

1. Kapazitiver Feuchtigkeitsfühler mit einer auf ein feuchtigkeitsunempfindliches Substrat (1; 20) aufgebrachten feuchtigkeitsempfindlichen dünnen Schicht (6; 6′, 6″; 30; 38) aus Tantaloxid und mit wenigstens zwei an der Tantaloxidschicht im Abstand voneinander angeordneten Elektroden (3, 10; 10′, 10″; 24, 25; 31, 32), dadurch gekennzeichnet, dass die Tantaloxidschicht aus dem Oxid des hochohmigen Tantals geringere Dichte mit einem spezifischen Widerstand von mehr als 10 000 $\mu\Omega$cm besteht.

2. Feuchtigkeitsfühler nach Anspruch 1, dadurch gekennzeichnet, dass das hochohmige Tantal eine Dichte zwischen etwa 11 und 13 g/cm³ hat.

3. Feuchtigkeitsfühler nach Anspruch 1 oder 2, dadurch gekennzeichnet, dass die Tantaloxidschicht (6; 6′, 6″; 30) dadurch gebildet ist, dass eine auf das Substrat aufgebrachte Schicht (3; 3′, 3″; 22) von hochohmigem Tantal geringer Dichte nur über einen Teil ihrer Dicke oxidiert ist, und dass das verbleibende hochohmige Tantal geringer Dichte eine oder mehrere Elektroden (3; 3′, 3″; 24, 25) des Feuchtigkeitsfühlers bildet.

4. Feuchtigkeitsfühler nach einem der Ansprüche 1 bis 3, dadurch gekennzeichnet, dass das hochohmige Tantal geringer Dichte mit Stickstoff und/oder Sauerstoff dotiert ist.

5. Feuchtigkeitsfühler nach einem der vorhergehenden Ansprüche, dadurch gekennzeichnet, dass eine erste Elektrode (3; 3', 3") zwischen dem Substrat (1) und der Tantaloxidschicht (6; 6', 6") angeordnet ist und eine zweite Elektrode (10; 10', 10") auf die dem Substrat (1) abgewandte Fläche der Tantaloxidschicht (6; 6', 6") aufgebracht ist.

6. Feuchtigkeitsfühler nach Anspruch 5, dadurch gekennzeichnet, dass die zweite Elektrode (10) durch eine Metallschicht (7, 8) mit Gitterstruktur gebildet ist.

7. Feuchtigkeitsfühler nach Anspruch 6, dadurch gekennzeichnet, dass die den Gitteröffnungen (11) entsprechende Gesamtfläche gross gegen die vom Metall (7, 8) bedeckte Fläche ist.

8. Feuchtigkeitsfühler nach Anspruch 6 oder 7, dadurch gekennzeichnet, dass die Kanten der Gitterstruktur eine Länge von 10 m/cm² oder mehr haben.

9. Feuchtigkeitsfühler nach einem der Ansprüche 6 bis 8, dadurch gekennzeichnet, dass die Metallschicht (7, 8) eine Dicke von mehr als 0,1 µm hat.

10. Feuchtigkeitsfühler nach einem der Ansprüche 6 bis 9, dadurch gekennzeichnet, dass die Metallschicht eine auf die Tantaloxidschicht (6) aufgebrachte Chromschicht (7) und eine auf die Chromschicht (7) aufgebrachte Goldschicht (8) enthält.

11. Feuchtigkeitsfühler nach einem der Ansprüche 5 bis 10, dadurch gekennzeichnet, dass auf dem Substrat (1) zwei elektrisch voneinander getrennte erste Elektroden (3', 3") in geringem Abstand nebeneinander angebracht sind, dass jede erste Elektrode (3', 3") mit einer Tantaloxidschicht (6', 6") bedeckt ist, dass auf jeder Tantaloxidschicht (6', 6") eine zweite Elektrode (10', 10") angebracht ist, dass die beiden zweiten Elektroden (10', 10") elektrisch miteinander verbunden sind und dass die Anschlüsse (14', 14") des Feuchtigkeitsfühlers an den beiden ersten Elektroden (3', 3") angebracht sind.

12. Feuchtigkeitsfühler nach einem der Ansprüche 5 bis 11, dadurch gekennzeichnet, dass zwischen dem Substrat (1) und der bzw. jeder ersten Elektrode (3; 3', 3") eine Tantaloxidschicht (2) angeordnet ist.

13. Feuchtigkeitsfühler nach einem der Ansprüche 1 bis 4, gekennzeichnet durch zwei Elektroden (24, 25; 31, 32), die eine Kammstruktur mit ineinandergreifenden Fingern haben.

14. Feuchtigkeitsfühler nach Anspruch 13, dadurch gekennzeichnet, dass die Tantaloxidschicht (30; 38) aus dem Oxid des hochohmigen Tantals geringer Dichte die beiden Elektroden (24, 25; 31, 32) bedeckt.

15. Feuchtigkeitsfühler nach Anspruch 14, dadurch gekennzeichnet, dass jede der beiden Elektroden (24, 25; 31, 32) durch eine dünne Schicht (22; 36) aus hochohmigem Tantal geringer Dichte gebildet ist, die an der Oberfläche zur Bildung der Tantaloxidschicht (30; 38) oxidiert ist.

16. Feuchtigkeitsfühler nach Anspruch 15, dadurch gekennzeichnet, dass in dem Substrat (1) eine der Form der einen Kammelektrode (32) entsprechende Vertiefung (34) angebracht ist, dass die eine Kammelektrode (32) durch eine auf dem Grund der Vertiefung (34) liegende, an der Oberfläche oxidierte Schicht (36a) aus hochohmigem Tantal geringer Dichte gebildet ist, dass die andere Kammelektrode (31) durch eine auf der Oberfläche des Substrats (1) ausserhalb der Vertiefung (34) liegende, an der Oberfläche oxidierte Schicht (36b) aus hochohmigem Tantal geringer Dichte gebildet ist, und dass die Zwischenräume zwischen den Kanten der Finger der beiden Kammelektroden (31, 32) durch eine Schicht (38) aus dem Oxid des hochohmigen Tantals geringer Dichte überbrückt sind.

17. Feuchtigkeitsfühler nach Anspruch 16, dadurch gekennzeichnet, dass die beiden Kammeleketroden (31, 32) durch eine in die Vertiefung (34) und auf die umgebende Oberfläche des Substrats (1) aufgebrachte Schicht (36) aus hochohmigem Tantal geringer Dichte gebildet sind, die über eine solche Tiefe oxidiert ist, dass die Oxidation an den vertikalen Begrenzungswänden (34b) der Vertiefung (34) durch die ganze Dicke der Tantalschicht (36) hindurchgeht und an den die horizontalen Flächen bedeckenden Stellen sich nur über einen Teil der Dicke der Tantalschicht (36) erstreckt.

18. Verfahren zum Herstellen der feuchtigkeitsempfindlichen Schicht eines kapazitiven Feuchtigkeitsfühlers nach einem der Ansprüche 1 bis 17, bei dem auf einem feuchtigkeitsempfindlichen Substrat (1; 20) durch Kathodenzerstäubung einer Tantalprobe eine dünne Tantalschicht (3; 22; 36) abgeschieden wird und die Tantalschicht (3; 22; 36) oxidiert wird, dadurch gekennzeichnet, dass die für die Kathodenzerstäubung massgeblichen Parameter, nämlich die Beschleunigungsspannung der zur Zerstäubung der Tantalprobe verwendeten Argonionen, der Partialdruck des Argons und die Substrattemperatur, so eingestellt werden, dass sich die ergebende Tantalschicht (3; 22; 36) aus Tantal geringer Dichte mit einem spezifischen Widerstand von mehr als 10 000 µΩcm besteht.

19. Verfahren nach Anspruch 18, dadurch gekennzeichnet, dass das Oxidieren der Tantalschicht (3; 3', 3"; 22; 36) durch anodische Oxidation erfolgt.

20. Verfahren nach Anspruch 19, dadurch gekennzeichnet, dass die anodische Oxidation mit grosser vorgegebener Stromdichte begonnen wird und dass die Stromdichte während der anodischen Oxidation allmählich verringert wird.

21. Verfahren nach Anspruch 19, dadurch gekennzeichnet, dass die anodische Oxidation mit konstanter grosser Stromdichte bis zum Erreichen eines ersten vorgegebenen Spannungswertes durchgeführt wird, dass die Stromdichte dann auf einen kleinen Wert verringert wird, und dass die anodische Oxidation dann mit konstantem kleinem Wert bis zum Erreichen eines zweiten, höheren Spannungswertes fortgesetzt wird.

## Claims

1. A capacitive moisture sensor comprising a thin moisture sensitive layer (6; 6′, 6″; 30; 38) of tantalum oxide applied to a moisture insensitive substrate (1; 20) and at least two electrodes (3, 10; 10′, 10″; 24, 25; 31, 32) placed on the tantalum oxide layer spaced apart from each other, characterized in that the tantalum oxide layer comprises the oxide of highly resistive low density tantalum having a resistivity of more than 10 000 μΩcm.

2. A moisture sensor according to claim 1, characterized in that the highly resistive tantalum has a density between about 11 and 13 g/cm³.

3. A moisture sensor according to claim 1 or 2, characterized in that the tantalum oxide layer (6; 6′, 6″; 30) is formed in that a highly resistive low density tantalum layer (3; 3′, 3″; 22) applied to the substrate is oxidized only over a part of its thickness and in that the remaining highly resistive low density tantalum forms one or more electrodes (3; 3′, 3″; 24, 25) of the moisture sensor.

4. A moisture sensor according to any one of claims 1 to 3, characterized in that the highly resistive low density tantalum is doped with nitrogen and/or oxygen.

5. A moisture sensor according to any one of the preceding claims, characterized in that a first electrode (3; 3′, 3″) is disposed between the substrate (1) and the tantalum oxide layer (6; 6′, 6″) and a second electrode (10; 10′, 10″) is applied to the surface of the tantalum oxide layer (6; 6′, 6″) remote from the substrate (1).

6. A moisture sensor according to claim 5, characterized in that the second electrode (10) is formed by a metal layer (7, 8) with lattice structure.

7. A moisture sensor according to claim 6, characterized in that the total area corresponding to the lattice openings (11) is large compared with the area covered by the metal (7, 8).

8. A moisture sensor according to claim 6 or 7, characterized in that the edges of the lattice structure have a length of 10 m/cm² or more.

9. A moisture sensor according to any one of claims 6 to 8, characterized in that the metal layer (7, 8) has a thickness of more than 0.1 μm.

10. A moisture sensor according to any one of claims 6 to 9, characterized in that the metal layer comprises a chromium layer (7) applied to the tantalum oxide layer (6) and a gold layer (8) applied to the chromium layer (7).

11. A moisture sensor according to any one of claims 5 to 10, characterized in that on the substrate (1) two first electrodes (3′, 3″) electrically separated from each other are arranged a small distance apart adjacent each other, that each first electrode (3′, 3″) is covered with a tantalum oxide layer (6′, 6″), that on each tantalum oxide layer (6′, 6″) a second electrode (10′, 10″) is disposed, that the two second electrodes (10′,10″) are electrically connected to each other and in that the terminals (14′, 14″) of the moisture sensor are arranged on the two first electrodes (3′, 3″).

12. A moisture sensor according to any one of claims 5 to 11, characterized in that between the substrate (1) and the or each first electrode (3; 3′, 3″) a tantalum oxide layer (2) is disposed.

13. A moisture sensor according to any one of claims 1 to 4, characterized by two electrodes (24, 25; 31, 32) which have a comb structure with interlacing fingers.

14. A moisture sensor according to claim 13, characterized in that the tantalum oxide layer (30; 38) comprising the oxide of the highly resistive low density tantalum covers the two electrodes (24, 25; 31, 32).

15. A moisture sensor according to claim 14, characterized in that each of the two electrodes (24, 25; 31, 32) is formed by a thin layer (22; 36) of highly resistive low density tantalum which is oxidized at the surface to form the tantalum oxide layer (30; 38).

16. A moisture sensor according to claim 15, characterized in that in the substrate (1) a depression (34) is disposed corresponding to the form of the one comb electrode (32), that the one comb electrode (32) is formed by a layer (36a) of highly resistive low density tantalum which lies on the bottom of the depression (34) and is oxidized at the surface, that the other comb electrode (31) is formed by a layer (36b) of highly resistive low density tantalum which lies on the surface of the substrate (1) outside the depression (34) and is oxidized at the surface, and in that the intermediate spaces between the edges of the fingers of the two comb electrodes (31, 32) are bridged by a layer (38) of the oxide of the highly resistive low density tantalum.

17. A moisture sensor according to claim 16, characterized in that the two comb electrodes (31, 32) are formed by a layer (36) of highly resistive low density tantalum which is applied in the depression (34) and on the surrounding surface of the substrate (1) and which is oxidized over a depth such that the oxidation at the vertical boundary walls (34b) of the depression (34) goes through the entire thickness of the tantalum layer (36) and at the areas covering the horizontal surfaces extends only over a portion of the thickness of the tantalum layer (36).

18. A method of manufacturing the moisture sensitive layer of a capacitive moisture sensor according to any one of claims 1 to 17, wherein on a moisture sensitive substrate (1; 20) by cathode sputtering of a tantalum sample a thin tantalum layer (3; 22; 36) is deposited and the tantalum layer (3; 22, 36) is oxidized, characterized in that the parameters determining the cathode sputtering, namely the acceleration voltage of the argon ions used for sputtering, the partial pressure of the argon and the substrate temperature, are so set that the resulting tantalum layer (3; 22; 36) comprises low density tantalum having a resistivity of more than 10 000 μΩcm.

19. A method according to claim 18, characterized in that the oxidation of the tantalum layer (3; 3', 3"; 22, 36) is by anodic oxidation.

20. A method according to claim 19, characterized in that the anodic oxidation is started with large predetermined current density and that the current density is gradually reduced during the anodic oxidation.

21. A method according to claim 19, characterized in that the anodic oxidation is carried out with constant high current density until a first predetermined voltage value is reached, that the current density is then reduced to a small value and in that the anodic oxidation is then continued with constant small value until a second higher voltage value is reached.

**Revendications**

1. Capteur d'humidité capacitif ayant une couche mince (6; 6', 6"; 30; 38) d'oxyde de tantale appliquée sur un substrat (1; 20) insensible à l'humidité et ayant au moins deux électrodes (3, 10; 10', 10"; 24, 25; 31, 32) disposées à distance l'une de l'autre sur la couche d'oxyde de tantale, caractérisé par le fait que la couche d'oxyde de tantale se compose de l'oxyde de tantale de valeur ohmique élevée, de faible densité et ayant une résistance spécifique supérieure à 10 000 μΩcm.

2. Capteur d'humidité conforme à la revendication 1, caractérisé par le fait que le tantale de valeur ohmique élevée a une densité comprise entre environ 11 et 13 g/cm³.

3. Capteur d'humidité conforme à la revendication 1 ou à la revendication 2, caractérisé par le fait que la couche d'oxyde de tantale (6; 6', 6"; 30) est constituée de façon qu'une couche (3; 3', 3"; 22) de tantale de valeur ohmique élevée, de faible densité, appliquée sur le substrat ne soit oxydée que sur une partie de son épaisseur, et que le tantale de valeur ohmique élevée, de faible densité, restant constitue une ou plusieurs électrodes (3; 3', 3"; 24, 25) du capteur d'humidité.

4. Capteur d'humidité conforme à l'une des revendications 1 à 3, caractérisé par le fait que le tantale de valeur ohmique élevée, de faible densité, est dopé avec de l'azote et/ou avec de l'oxygène.

5. Capteur d'humidité conforme à l'une des revendications précédentes, caractérisé par le fait qu'une première électrode (3; 3', 3") est disposée entre le substrat (1) et la couche d'oxyde de tantale (6; 6', 6") et qu'une deuxième électrode (10; 10', 10") est appliquée sur la surface de la couche d'oxyde de tantale (6; 6', 6") tournée du côté opposé au substrat (1).

6. Capteur d'humidité conforme à la revendication 5, caractérisé par le fait que la deuxième électrode (10) est constituée par une couche métallique (7, 8) ayant une structure en grille.

7. Capteur d'humidité conforme à la revendication 6, caractérisé par le fait que la surface totale correspondant aux ouvertures de la grille (11) est grande par rapport à la surface recouverte par le métal (7, 8).

8. Capteur d'humidité conforme à la revendication 6 ou à la revendication 7, caractérisé par le fait que les bords de la structure en grille ont une longueur de 10 m/cm² ou plus.

9. Capteur d'humidité conforme à l'une des revendications 6 à 8, caractérisé par le fait que la couche métallique a une épaisseur supérieure à 0,1 μm.

10. Capteur d'humidité conforme à l'une des revendications 6 à 9, caractérisé par le fait que la couche métallique contient une couche de chrome (7) appliquée sur la couche d'oxyde de tantale (6) et une couche d'or (8) appliquée sur la couche de chrome (7).

11. Capteur d'humidité conforme à l'une des revendications 5 à 10, caractérisé par le fait que sur le substrat (1) sont placées l'une à côté de l'autre à faible distance deux premières électrodes (3', 3") électriquement séparées l'une de l'autre, que chacune de ces premières électrodes (3', 3") est recouverte d'une couche d'oxyde de tantale (6', 6"), que sur chacune des couches d'oxyde de tantale (6', 6") est placée une deuxième électrode (10', 10"), que les deux deuxièmes électrodes (10', 10") sont reliées électriquement entre elles et que les connexions (14', 14") du capteur d'humidité sont placées sur les deux premières électrodes (3', 3").

12. Capteur d'humidité conforme à l'une des revendications 5 à 11, caractérisé par le fait qu'entre le substrat (1) et la première électrode ou chacune des premières électrodes (3; 3', 3") est disposée une couche d'oxyde de tantale (2).

13. Capteur d'humidité conforme à l'une des revendications 1 à 4, caractérisé par deux électrodes (24, 25; 31, 32) ayant une structure en forme de peigne dont les dents s'engrènent les unes dans les autres.

14. Capteur d'humidité conforme à la revendication 13, caractérisé par le fait que la couche d'oxyde de tantale (30; 38) en oxyde du tantale de valeur ohmique élevée, de faible densité, recouvre les deux électrodes (24, 25; 31, 32).

15. Capteur d'humidité conforme à la revendication 14, caractérisé par le fait que chacune des deux électrodes (24, 25; 31, 32) est constituée d'une mince couche (22, 36) de tantale de valeur ohmique élevée, de faible densité, qui est oxydée en surface pour constituer la couche d'oxyde de tantale (30; 38).

16. Capteur d'humidité conforme à la revendication 15, caractérisé par le fait que dans le substrat (1) est pratiqué un évidement (34) dont la forme correspond à celle d'une électrode en forme de peigne (32), que l'une des électrodes en forme de peigne (32) est constituée par une couche (36a) de tantale de valeur ohmique élevée, de faible densité, oxydée en surface et située sur le fond de l'évidement (34), que l'autre électrode en forme de peigne (31) est constituée par une couche (36b) de tantale de valeur ohmique élevée, de faible densité, oxydée en surface et située à la surface du substrat (1) en dehors de l'évidement (34), et que les intervalles entre les bords des dents des deux électrodes en forme de peigne (31, 32) sont shuntées par une couche (38) d'oxyde du tantale de valeur ohmique élevée, de faible densité.

17. Capteur d'humidité conforme à la revendication 16, caractérisé par le fait que les deux électrodes en forme de peigne (31, 32) sont constituées d'une couche (36) de tantale de valeur ohmique élevée, de faible densité appliquée dans l'évidement (34) et sur la surface environnante du substrat (1), laquelle couche est oxydée sur une profondeur telle que sur les parois (34b) qui délimitent verticalement l'évidement (34) l'oxydation pénètre à travers toute l'épaisseur de la couche de tantale (36) et qu'aux endroits qui recouvrent la surface horizontale elle ne s'étend que sur une partie de l'épaisseur de la couche de tantale (36).

18. Procédé de fabrication de la couche sensible à l'humidité d'un capteur d'humidité capacitif conforme à l'une des revendications 1 à 17, dans laquelle sur un substrat (1; 20) insensible à l'humidité on dépose une mince couche de tantale (3; 22; 36) par pulvérisation cathodique d'un échantillon de tantale et on oxyde la couche de tantale (3; 22; 36), caractérisé par le fait que les paramètres prépondérants pour la pulvérisation cathodique, à savoir la tension d'accélération des ions d'argon utilisés pour la pulvérisation de l'échantillon de tantale, la pression partielle de l'argon et la température du substrat sont réglés de façon que la couche de tantale (3; 22; 36) qui en résulte soit composée de tantale de faible densité ayant une résistance spécifique supérieure à 10 000 $\mu\Omega$cm.

19. Procédé conforme à la revendication 18, caractérisé par le fait que l'oxydation de la couche de tantale (3; 3′, 3″; 22; 36) s'effectue par oxydation anodique.

20. Procédé conforme à la revendication 19, caractérisé par le fait qu'on commence l'oxydation anodique avec une grande densité de courant fixée d'avance et que pendant l'oxydation anodique, on diminue graduellement la densité de courant.

21. Procédé conforme à la revendication 19, caractérisé par le fait que l'oxydation anodique est réalisée avec une grande densité de courant constante jusqu'à ce que l'on atteigne une première valeur de la tension, fixée d'avance, puis que la densité de courant est diminuée à une petite valeur, et qu'ensuite elle se poursuit à une petite valeur constante jusqu'à atteindre une deuxième valeur plus élevée de la tension.

# Fig.1

| | |
|---|---|
| I | Ätzschutzschicht auf Glassubstrat aufbringen |
| II | Schicht aus hochohmigem Tantal geringer Dichte aufstäuben |
| III | Ätzmaske aufbringen |
| IV | Ätzen und Ätzmaske entfernen |
| V | Oxidationsmaske aufbringen |
| VI | Anodisieren und Oxidationsmaske entfernen |
| VII | Nachbehandlung des Tantaloxids |
| VIII | Chrom- und Goldschichten aufdampfen |
| IX | Ätzmaske aufbringen |
| X | Ätzen und Ätzmaske entfernen |
| XI | Nachbehandlung |

# Fig.2a

# Fig.2b

# Fig.2c

# Fig.2d

# Fig.2e

0 043 001

Fig.2f

Fig.2g

Fig.2h

Fig.2i

19

# Fi g.3

3

3a

3b

# Fig.4



0 043 001

# Fig.5

# Fig.6

25

Fig.7a

21
20

Fig.7b

22
21
20

Fig.7c

23    23
22
21
20

Fig.7d

24    25    22
22
21
20

Fig.7e

29    29
28    22    22    28
26    27
21
20

Fig.7f

29    22    30    22    29
28
26    28    27    20
21

# Fig.8

## Fig.9a

## Fig.9b

## Fig.10a

## Fig.10b

## Fig.10c

# Fig.10d

# Fig.10e

# Fig.10f

# Fig.10g